# EUROPÄISCHE PATENTSCHRIFT

(11) **EP 2 620 733 B1**
(45) Veröffentlichungstag und Bekanntmachung des Hinweises auf die Patenterteilung: **19.03.2014**
(21) Anmeldenummer: 12152931.7
(22) Anmeldetag: 27.01.2012
(51) Int. Cl.: A61C 13/20, A61C 13/15

(54) **Dentalgerät**
Dental device
Appareil dentaire

(43) Veröffentlichungstag der Anmeldung: 31.07.2013
(73) Patentinhaber: Ivoclar Vivadent AG, 9494 Schaan (LI)
(72) Erfinder: Brotzge, Michael, 6842 Koblach (AT); Grünenfelder, Robert, 9492 Eschen (LI); Kettner, Philipp, 6830 Rankweil (AT); Lorünser, Johannes, 6700 Bludenz (AT)
(74) Vertreter: Baronetzky, Klaus

(56) Entgegenhaltungen:
- US-A1- 2001 038 705
- US-A1- 2008 237 211
- US-A1- 2010 047 731
- US-B2- 7 108 508

## Beschreibung

Die Erfindung betrifft ein Dentalgerät für die Behandlung eines Dentalrestaurationsteils, gemäß dem Oberbegriff von Anspruch 1.

Es ist seit langem bekannt, Dentalgeräte wie beispielsweise dentale Brennöfen, aber auch Lichthärtgeräte, programmgesteuert zu betreiben. Als eines der zahlreichen Beispiele hierfür sei auf die DE 38 31 539 A1 die US 2010/0047731 oder die US7108508 verwiesen; bei dieser Lösung können nach Wahl des Benutzers verschiedene Parameter eingestellt werden.

Aus der DE 199 13 891 A1 ist ein Steuerverfahren für ein Dentalgerät bekannt, wobei programmgesteuert und materialabhängig ein Brennzyklus durchgeführt werden soll. Die Bewegung eines Kolbens wird erfasst und die Abschaltung in Abhängigkeit von dem Bewegungsprofil eingeleitet.

Die Erfassung der Temperatur von Brennöfen ist seit langem bekannt, und auch die Steuerung von Brennöfen basierend auf dem Messergebnis. Als Beispiel hierfür seien die DE 10 2007 035 609 A1 und die EP 2 105 691 A1 genannt.

Ferner ist es bekannt geworden für die Erfassung der Mundsituation eines Patienten eine Kamera einzusetzen, um dann gegebenenfalls auch eine CAD/CAM-Einrichtung für die Bereitstellung des Zahnersatzes zu steuern.

Derartige Lösungen sind in zahlreichen Abwandlungen bekannt geworden, und man versucht auch bereits seit langem, durch visuellen Vergleich eines zu erzeugenden Zahnersatzes mit den Nachbarzähnen und durch Wahl der entsprechenden Zahnfarbe ein optisch möglichst ansprechendes Restaurationsergebnis bereitzustellen.

In diesem Zusammenhang ist es auch bereits vorgeschlagen worden, die Zahnfarbe und weitere Parameter der Nachbarzähne zu erfassen, elektronisch auszuwerten und die der Auswertung am nächsten kommende Zahnfarbe eines Zahnschlüssels für die Erzeugung der Dentalrestauration zu selektieren.

Ferner ist es auch bereits vorgeschlagen worden, derartige Ersatzzähne zu visualisieren und gleichsam elektronisch einzublenden, um - ähnlich wie bei der "virtuellen Frisur" - bereits vorab eine Vorstellung über die Ästhetik des zu erzielenden Restaurationsergebnisses zu gewinnen.

Die bekannten Lösungen weisen jedoch Unzulänglichkeiten auf.

Daher liegt der Erfindung die Aufgabe zugrunde, ein Dentalgerät gemäß dem Oberbegriff von Anspruch 1 zu schaffen, das hinsichtlich der Bedienbarkeit deutlich verbessert ist, ohne dass Abstriche an der Qualität der erzeugten Dentalrestaurationsteile gemacht werden müssten.

Diese Aufgabe wird erfindungsgemäß durch Anspruch 1 gelöst. Vorteilhafte Weiterbildungen ergeben sich aus den Unteransprüchen.

Erfindungsgemäß besonders günstig ist es, dass das Dentalgerät bei Erfassung des Objektes durch die Erfassungsvorrichtung gleichsam automatisch die richtige Reaktion zeigen kann, beispielsweise ein entsprechendes Programm starten oder zur Auswahl anzeigen kann. Dies geschieht bevorzugt über eine Bilderkennung, die das von einer Kamera der Erfassungsvorrichtung aufgenommene Bild bearbeitet und beim Vorliegen von charakteristischen Merkmalen das Objekt gleichsam identifiziert.

Die Identifikation geschieht anhand einer Art Datenbank, die eine Vielzahl von vorgegebenen Referenzobjekten enthält, und die bereits vorab erstellt wurde und in dem Dentalgerät und/oder einem Server und/oder im Internet (cloud) abgespeichert ist. Bei Übereinstimmung einer bestimmten Anzahl von Merkmalen eines Referenzobjekts mit dem Bild des erfassten Objekts wird die Auslösung vorgenommen, beispielsweise das dazugehörige Betriebsprogramm gestartet.

Erfindungsgemäß lässt sich eine Verbesserung der Restaurationsleistung mit einer besseren Anpassbarkeit an unterschiedliche Restaurationssituationen unter Berücksichtigung der komplexen Steuerung von Dentalgeräten, gerade insbesondere von Lichthärtgeräten, aber auch von Brennöfen, kombinieren.

Auch bei komplexen Anforderungen an den bedienenden Zahntechniker, oder gegebenenfalls auch an den Zahnarzt, kann dieser erfindungsgemäß die von dem Dentalgerät geforderten Eingaben machen, da er von dem Dentalgerät unterstützt wird. Erfindungsgemäß lässt sich die Anzahl der möglichen Parameter bei der Bedienung des Dentalgeräts reduzieren; in der Grundeinstellung müssen lediglich wenige Einstellmöglichkeiten belassen werden, die dann die häufigsten Bedienungsversionen abdecken.

Damit wird erfindungsgemäß vermieden, dass der Zahntechniker überfordert wird, wenn er eine seltenere Bedienungssituation handhaben muss, weil er erfindungsgemäß nicht gleichsam nur in den Grundfunktionen des Dentalgeräts trainiert ist, sondern gerade die Detailbedienung, die für seltenere Behandlungssituationen erforderlich ist, vornimmt.

So lassen sich hochwertige Dentalrestaurationsergebnisse unter spezieller Abstimmung der erforderlichen Parameter des Dentalgeräts zur Erzeugung der Dentalrestaurationsteile, auch bei Anpassung an den jeweiligen Einzelfall, erzielen.

In erfindungsgemäß besonders bevorzugter Ausgestaltung ist es vorgesehen, die Übereinstimmung anhand der Merkmale abgestuft festzustellen. Wenn beispielsweise eine Übereinstimmung oberhalb eines ersten Schwellwertes festgestellt wird, wird eine Anzahl von Referenzobjekten dem Benutzer zur Auswahl angezeigt. Der Benutzer kann dann das gewünschte Referenzobjekt bzw. das hiermit verbunden Betriebsprogramm anwählen.

Wenn die Übereinstimmung einen zweiten Stellenwert übersteigt, und/oder wenn lediglich ein Referenzobjekt als übereinstimmend verbleibt, kann auch gleich das Betriebsprogramm automatisch ausgeführt oder gestartet oder zur Auswahl angezeigt werden.

Als Beispiel sei der Fall erwähnt, dass eine Datenbank 15 Merkmale - entsprechend 15 Datenfeldern - pro Referenzobjekt abgespeichert hat. Der erste Schwellwert sei beispielsweise auf 11 Merkmale eingestellt, und der zweite auf 13.

Wenn nun die Vergleichsvorrichtung anhand der Bilderkennung feststellt, dass eine Übereinstimmung zwischen dem erfassten Objekt und mehreren Referenzobjekten in 13 (oder mehreren) Merkmalen besteht, werden diese Merkmale dem Benutzer des Dentalgeräts angezeigt, beispielsweise auch auf einer beigefügten Anzeigevorrichtung. Die Datenbank habe 5 Einträge, bei denen die Merkmalsübereinstimmung bei 11 Merkmalen gegeben ist, und der Benutzer kann dann beispielsweise durch Antippen des Touchscreens der Anzeigevorrichtung das betreffende Betriebsprogramm auswählen. Hierbei ist bevorzugt zusätzlich das Betriebsprogramm selbst identifizierbar und räumlich benachbart dem betreffenden Referenzobjekt auf dem Bildschirm der Anzeigevorrichtung angezeigt.

In einem zweiten Fall des gleichen Dentalgeräts sei nun angenommen, dass das Objekt in 13 Merkmalen mit einem der Referenzobjekte, die in der Datenbank abgespeichert sind, übereinstimme.

Dieses Referenzobjekt ist dann praktisch automatisch selektiert, und das zugehörige, in dem Dentalgerät abgespeicherte Betriebsprogramm wird entweder sofort oder nach Bestätigung durch den Benutzer ausgeführt.

Wenn sich alternativ eine Übereinstimmung mit 2 Referenzobjekten finden lässt, werden diese trotz Erreichen des zweiten Schwellenwerts auf der Anzeigevorrichtung zur Auswahl angeboten, und der Benutzer muss sich für eines der Betriebsprogramme entscheiden.

Als weiterer Fall sei nun die Möglichkeit der Vorauswahl angesprochen: Der Benutzer wählt vorab, also bevor das Objekt von der Erfassungsvorrichtung erfasst werden kann, welche Art eines Betriebsprogramms in Frage kommt. Die Art des Betriebsprogramms kann auch so verstanden werden, dass zahlreiche Betriebsprogramme zu je einer Gruppe zusammengefasst werden.

Bei Ausbildung des Dentalgeräts als Dentalbrennofen lässt sich beispielsweise die Betriebsprogrammgruppe "Sinterbrand" von der Betriebsprogrammgruppe "Glanzbrand" unterscheiden.

Der Benutzer wählt nun vorab die Betriebsprogrammgruppe "Sinterbrand".

Es sei nun analog zu dem letztbeschriebenen Fall angenommen, dass eines der Referenzobjekte der Betriebsprogrammgruppe "Glanzbrand" und eines der Betriebsprogrammgruppe "Sinterbrand" angehört.

Nachdem der "Glanzbrand" durch die Vorauswahl als Betriebsprogrammgruppe vorab ausgeschlossen ist, bleibt bei 13 ermittelten übereinstimmenden Merkmalen lediglich das Referenzobjekt aus der Betriebsprogrammgruppe "Sinterbrand", so dass die Zuordnung eindeutig ist und das zugehörige Betriebsprogramm auch automatisch gestartet werden kann, ohne dass es einer zusätzlichen Auswahl durch den Benutzer bedarf.

Erfindungsgemäß besonders günstig ist es, dass das erfindungsgemäße Dentalgerät leicht zu bedienen ist, aber dennoch eine hochwertige und an das jeweilige Objekt angepasste Einzelfall-Bearbeitung ermöglicht.

Hierbei kann das Objekt dem Dentalrestaurationsteil bzw. dessen Vorprodukt entsprechen, oder auch nicht. In einer möglichen Ausgestaltung ist das Objekt das Gesicht oder der Fingerabdruck eines Benutzers. In einer weiteren Ausgestaltung ist das Objekt die nicht-gebrannte Zahnbrücke, der nicht-gebrannte Einzelzahn oder die nicht-gebrannte Krone.

In einer weiteren Ausgestaltung ist das Objekt eine Muffel, die für das Brennen und Pressen in einem Muffelofen vorbereitet ist, aber im "Rohzustand" vorliegt.

In einer weiteren Ausgestaltung ist das Objekt ein Material, und die Anpassung erfolgt durch die Selektion der zu dem Material passenden Betriebsprogramme bzw. Betriebsprogrammgruppen.

Wesentlich ist, dass das Objekt dem angewählten Programm oder der angewählten Programmgruppe zugeordnet wird und zusammen mit dem Programm bzw. der Programmgruppe als Referenzobjekt abgespeichert ist.

Die Erfassungsvorrichtung kann eine Kamera aufweisen, und das Objekt kann dann bevorzugt vor die Kamera gehalten werden. Auf einer Anzeigevorrichtung des Ofens wird dann das Objekt in der erfassten Form dargestellt. Über die Bilderkennungsvorrichtung, die typischerweise software-mäßig realisiert ist, wird dann ein formgleiches oder formähnliches Objekt zur Auswahl dargestellt oder gleich ausgewählt, wobei das Starten des Betriebsprogramms entweder automatisch oder durch Drücken einer Bestätigungstaste durch den Bediener erfolgen kann.

Wenn kein formgleiches Objekt abgespeichert ist, werden die noch ähnlichsten Objekte auf der Anzeigevorrichtung dargestellt und dem Anwender für die Auswahl angeboten.

Es versteht sich, dass verschiedene Objekte bei zweidimensionaler Erfassung je nach Drehlage im Raum unterschiedliche Bilder ergeben. Dies bedeutet aber, dass je nach Drehposition des Objekts die von der Erfassungsvorrichtung erfassten Bilder unterschiedlich sind. Um dennoch eine zuverlässige Erkennung zu ermöglichen, besteht entweder die Möglichkeit, die Erfassung dreidimensional vorzunehmen. Hierzu können beispielsweise 3 Kameras der Erfassungsvorrichtung aus unterschiedlichen und geeignet ausgewählten Raumwinkeln auf das Objekt gerichtet sein, und die Erfassung und damit die Bilderkennung erfolgt dann dreidimensional.

Eine weitere Möglichkeit besteht darin, den erwünschten Raumwinkel dem Benutzer vorzugeben.

Eine dritte Möglichkeit besteht darin, bei zweidimensionaler Erfassung grundsätzlich die Ansicht mit der größten Seitenerstreckung vorzugeben, so dass die zugehörige Kamera je stets auf die "Breitseite" des Objekts gerichtet ist.

Bei dieser Lösung wird der Benutzer zweckmäßig aufgefordert, das Objekt zu drehen, und wenn die erwünschte Drehstellung, die der größten Seitenerstreckung des Objekts bei zweidimensionale Abtastung entspricht, erkannt ist, wird dieses Bild als Vergleichsbasis verwendet.

Es versteht sich, dass die Kamera der Erfassungsvorrichtung sowohl innerhalb als auch außerhalb des Dentalgeräts ihren Erfassungsbereich haben kann. Beispielsweise kann bei einem Brennofen erkannt werden, wie viele und wie große Zähne im Brennraum abgelegt sind, bevor der Brennvorgang startet. Die Brennparameter können dann in Abhängigkeit von der aus der Größe abgeleiteten Masse der Dentalrestaurationsteile eingestellt werden.

In vorteilhafter Ausgestaltung ist es auch möglich, das Dentalgerät vor Ablauf des eigentlichen Betriebsprogramms bei Erkennung des Objekts eine zusätzliche Aktion vornehmen zu lassen. Hier ist es beispielsweise möglich, nach Auswertung des Vergleichsergebnisses und damit Bestimmung des fälligen Betriebsprogramms bei einem Dentalrestaurationsteil, das sich in der Nähe eines Dentalbrennofens befindet, automatisch die Ofenhaube zu öffnen und den Benutzer aufzufordern, das Dentalrestaurationsteil oder die Dentalrestaurationsteile auf dem Ofenunterteil im Brennraum abzulegen, um nach Ablage dann umgehend die Brennhaube abzusenken und den Ofen starten zu lassen.

Nachdem hier dann zwei Erfassungsschritte wünschenswert sind, ist es bevorzugt, entweder mit zwei Kameras zu arbeiten, oder über einen Spiegel oder eine sonstige Strahlungsumlenkung sowohl zu erfassen, welches Dentalrestaurationsteil in die Nähe des Dentalbrennofens gehalten wird, und andererseits zu erfassen, wenn das betreffende Dentalrestaurationsteil im Brennraum abgelegt ist.

Zur Erkennung des Dentalrestaurationsteils ist es günstig, wenn physikalische Parameter des Objekts ausgewählt werden. Hierzu gehört die Größe, die Kontur in der zweidimensionalen Betrachtung, die Farbe des Objekts, seine Oberflächenbeschaffenheit und weitere Parameter des Objekts, die von der Erfassungsvorrichtung erfassbar sind.

Es ist auch möglich, bei nicht genau identifizierbaren Objekten ein zweistufiges Verfahren anzuwenden. Die Betriebsprogramme des Dentalgeräts,sind zweckmäßigerweise in Betriebsprogrammgruppen zusammengefasst. Bei Erfassung eines Objekts wird dann bei vergleichsweise klarer Bestimmung eine Auswahl der möglichen Betriebsprogramme angezeigt, und bei geringer Merkmalsübereinstimmung zunächst eine Auswahl der möglichen Betriebsprogrammgruppen. Wenn der Benutzer dann die erwünschte Betriebsprogrammgruppe auswählt, werden innerhalb dieser die zur Verfügung stehenden Betriebsprogramme passend für das Objekt angezeigt.

Es versteht sich, dass auch für den Fall Sorge getragen werden muss, dass kein Betriebsprogramm zu dem erfassten Objekt passt. Bei nicht-Übereinstimmung oder wenigstens bei nicht-Ähnlichkeit des Objekts mit einem der Referenzobjekte, also bei der Feststellung, dass nicht auch nur eines der Referenzobjekte aus der Datenbank des Dentalgeräts dem erfassten Objekt ähnlich ist, wird dem Benutzer ausdrücklich kein Betriebsprogramm und keine Betriebsprogrammgruppe vorgeschlagen. Die Betriebsprogramme werden gesperrt und/oder der Benutzer wird aufgefordert, ein anderes Objekt zu verwenden.

Wenn das Dentalgerät so ausgelegt ist, dass auch bei eindeutiger Identifizierung eines Objekts, also vollständige Übereinstimmung mit dem Referenzobjekt und damit der Festlegung, welches Betriebsprogramm auszuführen ist, dessen Ausführung vom Benutzer bestätigt werden soll, besteht außer der Möglichkeit, eine Taste als Bestätigungsindikator zu verwenden, auch die Möglichkeit, dass der Benutzer eine Bestätigungsgeste vornimmt, die wiederum von der Kamera der Erfassungsvorrichtung erfasst wird und von dem Dentalgerät als Bestätigungsindikator verstanden wird, so dass das betreffende Betriebsprogramm ausgelöst wird.

Die Datenbank mit den Referenzobjekten kann lokal in dem Dentalgerät abgespeichert sein. Es besteht aber auch die Möglichkeit, die Datenbank an einen zentralen Server zu pflegen und zu warten, wobei es sich versteht, dass dann eine entsprechende Verbindung mit der Datenbank erforderlich ist, um den Zugriff auf diese zu ermöglichen.

Es besteht auch die Möglichkeit, dass eine lokale Kopie der Server-Datenbank in dem Dentalgerät abgespeichert ist, die dann beim Vorliegen beispielsweise einer Internetverbindung automatisch von der Server-Datenbank auf den neuesten Stand gebracht wird.

Die Anzeigevorrichtung des Dentalgeräts kann entweder mit diesem verbunden sein oder in den Ofen eingebaut sein. Es ist auch möglich, beispielsweise in einem Brennofen-Park mit einer Vielzahl von Brennöfen eine zentrale Tochteranzeige zu realisieren, oder eine Anzeigeumschaltung in einem Überwachungsraum für mehrere Brennöfen.

Die Bilderkennungsvorrichtung ist bevorzugt geeignet, ein von der Erfassungsvorrichtung zugeleitetes Bild des Objekts hinsichtlich bestimmter Merkmale zu erkennen und anhand dieser das Objekt zu identifizieren, und so einem der vorab abgespeicherten Objekte zuzuordnen.

In vorteilhafter Ausgestaltung des erfindungsgemäßen Dentalgeräts ist es vorgesehen, dass die von der Erfassungsvorrichtung erfassten Daten mit Daten von im Speicher des Dentalgeräts (10) vorab abgespeicherten Objekten vergleichbar sind, und dass das Dentalgerät in Abhängigkeit vom Vergleichsergebnis der Daten eines erfassten Objektes mit Daten von im Speicher des Dentalgeräts vorab abgespeicherten Objekten das dazugehörende Betriebsprogramm startet oder zur Auswahl anzeigt.

In vorteilhafter Ausgestaltung des erfindungsgemäßen Dentalgeräts ist es vorgesehen, dass das Betriebsprogramm von einem in dem Dentalgerät (10) ablauffähigen Betriebsprogramm oder von einer in dem Dentalgerät ablauffähigen Betriebsprogrammgruppe gebildet ist.

In vorteilhafter Ausgestaltung des erfindungsgemäßen Dentalgeräts ist es vorgesehen, dass die Erfassungsvorrichtung (18) eine Bilderkennungsvorrichtung aufweist, die dafür geeignet ist, ein von der Erfassungsvorrichtung erfasstes Bild des Objekts (24) und/oder Merkmale des Bildes zu erkennen.

In vorteilhafter Ausgestaltung des erfindungsgemäßen Dentalgeräts ist es vorgesehen, dass die Daten aus wenigstens einem Bild und/oder wenigstens einem Parameter des Objektes (24) bestehen.

In vorteilhafter Ausgestaltung des erfindungsgemäßen Dentalgeräts ist es vorgesehen, dass der wenigstens eine Parameter des Objekts (24) eine physikalisches und/oder ein optisches Merkmal des Objekts (24), wie die äußere Kontur und/oder die Höhe und/oder die Breite und/oder die Oberflächenbeschaffenheit des Objekts, und/oder Farben und/ oder Muster und/oder die Grundierung des Objekts ist.

In vorteilhafter Ausgestaltung des erfindungsgemäßen Dentalgeräts ist es vorgesehen, dass es sich bei dem Objekt (24) um ein ein- oder mehrgliedriges Dentalrestaurationsteil und/oder um einen in dem Dentalgerät (10) zu behandelnden Rohling und/oder eine Muffel und/oder eine Verpackung für ein Dentalmaterial handelt, die farblich oder über Zeichen codiert sein kann.

In vorteilhafter Ausgestaltung des erfindungsgemäßen Dentalgeräts ist es vorgesehen, dass es sich bei dem Objekt (24) um Teile des Benutzers, Teile seines Gesichts, seiner Hand, oder eines nur von ihm verwendeten ldentifikationsmerkmals wie seiner Chipkarte handelt.

In vorteilhafter Ausgestaltung des erfindungsgemäßen Dentalgeräts ist es vorgesehen, dass die Erfassungsvorrichtung (18) wenigstens eine Kamera (20) oder wenigstens einen Sensor, insbesondere einen Bildsensor, aufweist, deren Erfassungsbereiche (22) sich in das Innere des Dentalgeräts (10) und/oder außerhalb des Dentalgeräts (10) erstrecken.

In vorteilhafter Ausgestaltung des erfindungsgemäßen Dentalgeräts ist es vorgesehen, dass die Erfassungsvorrichtung (18) die Position und/oder die Drehlage des Objekts (24) im Raum erfasst und insbesondere an dem Dentalgerät (10) oder relativ zu dem Dentalgerät schwenkbar ist.

In vorteilhafter Ausgestaltung des erfindungsgemäßen Dentalgeräts ist es vorgesehen, dass das Vergleichen der Daten eines erfassten Objektes (24) mit den Daten der abgespeicherten Objekte mit einer Vergleichsvorrichtung erfolgt.

In vorteilhafter Ausgestaltung des erfindungsgemäßen Dentalgeräts ist es vorgesehen, dass, wenn beim Vergleich der Daten des erfassten Objektes (24) mit den abgespeicherten Daten keine eindeutige Zuordnung zu einem Betriebsprogramm oder einer Betriebprogrammgruppe erfolgen kann, auf einer Anzeigevorrichtung (14) die Daten von wenigstens zwei Objekten (24) angezeigt werden, deren Daten am ähnlichsten zu den Daten des erfassten Objektes (24) sind, und dass der Anwender selbst jene Daten wählt, die dem von ihm gewünschten Betriebsprogramm oder Betriebsprogrammgruppe entsprechen.

In vorteilhafter Ausgestaltung des erfindungsgemäßen Dentalgeräts ist es vorgesehen, dass die Bilderkennungsvorrichtung geeignet ist, mit Hilfe der erfassten Merkmale eines Bildes ein Objekt (24) zu identifizieren, und das dem Objekt zugeordnete Betriebsprogramm zu starten oder zur Auswahl anzuzeigen.

In vorteilhafter Ausgestaltung des erfindungsgemäßen Dentalgeräts ist es vorgesehen, dass die Anzeigevorrichtung (14) geeignet ist, das von der Erfassungsvorrichtung (18) erfasste Objekt (24) verkleinert oder vergrößert darzustellen.

In vorteilhafter Ausgestaltung des erfindungsgemäßen Dentalgeräts ist es vorgesehen, dass das Dentalgerät (10) von einem dentalen Brennofen, oder von einem dentalen Pressofen oder von einem Lichthärtgerät gebildet ist.

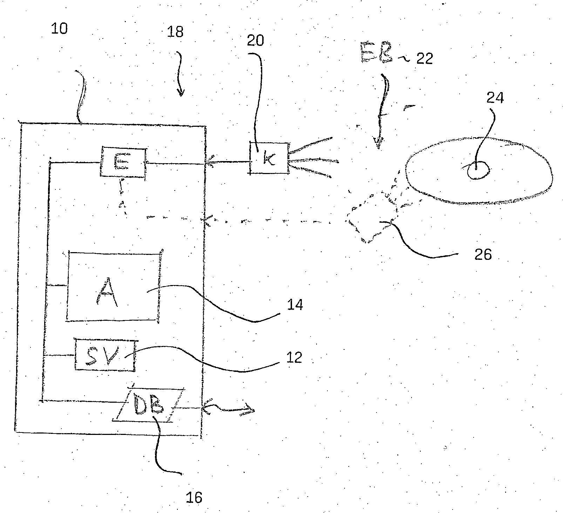

Weitere Einzelheiten, Vorteile und Merkmale ergeben sich aus der nachstehenden Beschreibung eines Ausführungsbeispiels der Erfindung anhand der Zeichnung.

Die einzige Figur der Zeichnung zeigt eine schematische Darstellung eines erfindungsgemäßen Dentalgeräts in einer Ausführungsform.

Das in der Fig. dargestellte Dentalgerät 10 ist beispielsweise als Lichthärtgerät, oder aber bevorzugt als dentaler Brennofen oder Pressofen ausgebildet.

Das Dentalgerät wird über eine Steuervorrichtung 12 gesteuert, die nicht dargestellte Bedienelemente aufweist, mit denen beispielsweise auch eines der in der Steuervorrichtung abgespeicherten Betriebsprogramme ausgewählt werden kann.

Das Dentalgerät weist ferner eine Anzeigevorrichtung 14 auf, die in dem dargestellten Ausführungsbeispiel an dem dentalen Brennofen angebracht ist. Wenn die Anzeigevorrichtung einen Touchscreen oder berührungsempfindlichen Bildschirm aufweist, lassen sich die Bedienungselemente der Steuervorrichtung auch dort anbringen bzw. einblenden.

Die Steuervorrichtung 12 steht ferner in Verbindung mit einer Datenbank 16, in der sogenannte Referenzobjekte abgespeichert sind. Hierbei handelt es sich um eine Ansammlung von Daten von Objekten, die nach vorgegebenen Parametern klassifiziert und nach der Art einer Datenbank abgelegt sind.

Die Referenzobjekte, die in der Datenbank 16 abgespeichert sind, werden von der Steuervorrichtung 12, die insofern eine Vergleichsvorrichtung aufweist, mit einem von einer Erfassungsvorrichtung 18 erfassten Objekt verglichen. Hierzu weist die Erfassungsvorrichtung eine Kamera 20 auf. Die Kamera 20 weist wiederum einen Erfassungsbereich 22 auf, in dem ein Objekt 24, wenn es sich dort befindet, bildmäßig erfasst wird. Die Erfassungsvorrichtung 18 oder die Steuervorrichtung 12 weisen die Möglichkeit zu einer Bilderkennung auf, die das zunächst vorliegende Bild nach bestimmten Parametern auswertet und diese Parameter dann als Vergleichsbasis bereitstellt.

Zu den Parametern des Objekts gehören physikalische und/oder optische Eigenschaften des Objekts, wie die äußere Kontur, die Höhe und/oder die Breite des Objekts, oder aber beispielsweise auch dessen Oberflächenbeschaffenheit, dessen Farben und/oder Muster oder beispielsweise eine Grundierung des Objekts.

Dies gilt dann, wenn es sich bei dem Objekt um ein Dentalrestaurationsteil, eine Muffel oder ähnliches handelt. Wenn das Objekt das Gesicht eines Benutzers ist, erfolgt die Bilderkennung zweckmäßig über eine an sich bekannte Gesichtserkennungssoftware.

Wenn es sich bei dem Objekt um die Verpackung für ein Dentalmaterial handelt, erfolgt die Erkennung im Rahmen der Erfassung zweckmäßig über eine geeignete Vorrichtung zur Dekodierung; im Falle einer Strichcode-Kodierung also einer Strichcode-Erkennungssoftware.

Die insofern ausgewerteten Daten des Objekts 24 werden nun der Vergleichsvorrichtung in der Steuervorrichtung 12 zugeführt, gegebenenfalls in dem Speicher dort abgespeichert und mit sämtlichen in Frage kommenden Referenzobjekten aus der Datenbank 16 verglichen.

Außerdem sind die Betriebsprogramme des Dentalgeräts 10 in dem Speicher der Steuervorrichtung 12 abgespeichert.

Das Vergleichen erfolgt über die Feststellung von Merkmalsübereinstimmungen, und wenn - so der einfachste Fall - lediglich eines der Referenzobjekte mit allen Merkmalen des erfassten Objekts übereinstimmt, wird auf der Anzeigevorrichtung 14 das dem Referenzobjekt zugehörige oder zugeordnete Betriebsprogramm angezeigt. Das Betriebsprogramm wird nun automatisch oder nach Bestätigung durch den Benutzer gestartet.

Bevorzugt ist zusätzlich das erfasste Bild des Objekts 24 auf der Anzeigevorrichtung 14 dargestellt, um insofern eine visuelle Bestätigung vorzunehmen.

Bei zweidimensionaler Erfassung des Objekts, wie es in der Fig. mit durchgezogenen Linien dargestellt ist, wird zweckmäßig auch die Position und/oder die Drehlage des Objekts im Raum erfasst. Dies kann beispielsweise dadurch erfolgen, dass in einer Art Vorprüfung zunächst über die Bilderkennung bestimmt wird, welche Position das Objekt im Raum hat. Über die Anzeigevorrichtung 14 können dann dem Benutzer Hinweise gegeben werden, wie er das Objekt zu drehen hat, um die Erkennung zu ermöglichen.

Es ist auch möglich, die Kamera 20 der Erfassungsvorrichtung 18 schwenkbeweglich an dem Dentalgerät anzubringen, um so eine Nachführung zu dem Objekt zu ermöglichen.

In der gestrichelt dargestellten modifizierten Ausgestaltung des erfindungsgemäßen Dentalgeräts weist die Erfassungsvorrichtung 18 eine weitere Kamera 26 auf, die im Winkel zu der Kamera 20 schräg auf das Objekt 24 gerichtet ist, und zusätzlich eine dritte Kamera, die hier nicht dargestellt ist, aber außerhalb der Zeichnungsebene liegt, bevorzugt deutlich beabstandet von dieser, und ebenfalls auf das Objekt 24 gerichtet ist.

Mit einer Dreifach-Kameraanordnung ist eine dreidimensionale Bilderkennung möglich.

Es versteht sich, dass die Art der Bilderkennung und die Weise, in welcher die Referenzobjekte in der Datenbank 16 abgespeichert sind, an die jeweilige Auslegung des Dentalgeräts 10 angepasst sind. Während bei dreidimensionaler Bilderkennung eine eindeutigere Identifizierung und Erkennung möglich ist, kann es günstig sein, pro Betriebsprogrammgruppe mehrere Referenzobjekte abzuspeichern, um eine Anpassung an unterschiedliche Erkennungssituationen des Objekts 24 zu ermöglichen.

In einer modifizierten Ausgestaltung wird nicht lediglich das als ausgewählt erkannte Referenzobjekt auf der Anzeigevorrichtung 14 dargestellt, sondern diejenigen Referenzobjekte, die dem bekannten Objekt 24 ähnlich sind. Der Benutzer hat damit die Möglichkeit, die Auswahl des auszulösenden Betriebsprogramms in gewissem Rahmen selbst zu treffen. Ihm werden andererseits nur die für das Objekt geeigneten Betriebsprogramme angeboten, so dass Fehlbedienungen nahezu ausgeschlossen sind, und beispielsweise Dentalmaterial bzw. die Größe einer Dentalrestauration kein ungeeignetes Betriebsprogramm, beispielsweise mit zu hohen Temperaturen, durchgeführt werden kann.

Das erfindungsgemäße Dentalgerät bietet insofern nicht nur eine wesentliche Erleichterung bei der Bedienung, sondern insbesondere auch eine deutliche Erhöhung der Bedienungssicherheit, aber auch eine verbesserte Anpassung an die einzelnen, auf das betreffende Objekt zugeschnittenen Brennparameter.

## Patentansprüche

1. Dentalgerät (10) für die Behandlung eines Dentalrestaurationsteiles, mit wenigstens einem Betriebsprogramm, mit einem Speicher (16) des Dentalgeräts (10) und mit wenigstens einer Erfassungsvorrichtung (18) für wenigstens ein Objekt (24), wobei mit der Erfassungsvorrichtung (18) die Daten des Objektes (24) erfassbar sind, **dadurch gekennzeichnet, dass** mit der Erfassungsvorrichtung (18) diese Daten zusammen mit einem dem Objekt zugeordneten Betriebsprogramm, in einem Speicher des Dentalgeräts (10) abspeicherbar sind.

2. Dentalgerät (10) nach Anspruch 1, **dadurch gekennzeichnet, dass** die von der Erfassungsvorrichtung erfassten Daten mit Daten von im Speicher des Dentalgeräts (10) vorab abgespeicherten Objekten vergleichbar sind, und dass das Dentalgerät in Abhängigkeit vom Vergleichsergebnis der Daten eines erfassten Objektes mit Daten von im Speicher des Dentalgeräts vorab abgespeicherten Objekten das dazugehörende Betriebsprogramm startet oder zur Auswahl anzeigt.

3. Dentalgerät (10) nach Anspruch 1 oder 2, **dadurch gekennzeichnet, dass** das Betriebsprogramm von einem in dem Dentalgerät (10) ablauffähigen Betriebsprogramm oder von einer in dem Dentalgerät ablauffähigen Betriebsprogrammgruppe gebildet ist.

4. Dentalgerät (10) nach Anspruch 1, 2 oder 3, **dadurch gekennzeichnet, dass** die Erfassungsvorrichtung (18) eine Bilderkennungsvorrichtung aufweist, die dafür geeignet ist, ein von der Erfassungsvorrichtung erfasstes Bild des Objekts (24) und/oder Merkmale des Bildes zu erkennen.

5. Dentalgerät (10) nach einem der vorhergehenden Ansprüche, **dadurch gekennzeichnet, dass** die Daten aus wenigstens einem Bild und/oder wenigstens einem Parameter des Objektes (24) bestehen.

6. Dentalgerät (10) nach Anspruch 5, **dadurch gekennzeichnet, dass** der wenigstens eine Parameter des Objekts (24) eine physikalisches und/oder ein optisches Merkmal des Objekts (24), wie die äußere Kontur und/oder die Höhe und/oder die Breite und/oder die Oberflächenbeschaffenheit des Objekts, und/oder Farben und/oder Muster und/oder die Grundierung des Objekts ist.

7. Dentalgerät (10) nach einem der vorhergehenden Ansprüche und ein Objekt, wobei es sich bei dem Objekt (24) um ein ein- oder mehrgliedriges Dentalrestaurationsteil und/oder um einen in dem Dentalgerät (10) zu behandelnden Rohling und/oder eine Muffel und/oder eine Verpackung für ein Dentalmaterial handelt, die farblich oder über Zeichen codiert sein kann.

8. Dentalgerät (10) nach einem der vorhergehenden Ansprüche und ein Objekt, wobei es sich bei dem Objekt (24) um ein Identifikationsmerkmal wie eine Chipkarte handelt.

9. Dentalgerät (10) nach einem der vorhergehenden Ansprüche, **dadurch gekennzeichnet, dass** die Erfassungsvorrichtung (18) wenigstens eine Kamera (20) oder wenigstens einen Sensor, insbesondere einen Bildsensor, aufweist, deren Erfassungsbereiche (22) sich in das Innere des Dentalgeräts (10) und/oder außerhalb des Dentalgeröts (10) erstrecken.

10. Dentalgerät (10) nach einem der vorhergehenden Ansprüche, **dadurch gekennzeichnet, dass** die Erfassungsvorrichtung (18) die Position und/oder die Drehlage des Objekts (24) im Raum erfasst und insbesondere an dem Dentalgerät (10) oder relativ zu dem Dentalgerät schwenkbar ist.

11. Dentalgerät (10) nach einem der vorhergehenden Ansprüche, **dadurch gekennzeichnet, dass** das Vergleichen der Daten eines erfassten Objektes (24) mit den Daten der abgespeicherten Objekte mit einer Vergleichsvorrichtung erfolgt.

12. Dentalgerät (10) nach einem der vorhergehenden Ansprüche, **dadurch gekennzeichnet, dass,** wenn beim Vergleich der Daten des erfassten Objektes (24) mit den abgespeicherten Daten keine eindeutige Zuordnung zu einem Betriebsprogramm oder einer Betriebprogrammgruppe erfolgen kann, auf einer Anzeigevorrichtung (14) die Daten von wenigstens zwei Objekten (24) angezeigt werden, deren Daten am ähnlichsten zu den Daten des erfassten Objektes (24) sind, und dass der Anwender selbst jene Daten wählt, die dem von ihm gewünschten Betriebsprogramm oder Betriebsprogrammgruppe entsprechen.

13. Dentalgerät (10) nach Anspruch 12, **dadurch gekennzeichnet, dass** die Anzeigevorrichtung (14) geeignet ist, das von der Erfassungsvorrichtung (18) erfasste Objekt (24) verkleinert oder vergrößert darzustellen.

14. Dentalgerät (10) nach einem der Ansprüche 2 bis 13, **dadurch gekennzeichnet, dass** die Bilderkennungsvorrichtung geeignet ist, mit Hilfe der erfassten Merkmale eines Bildes ein Objekt (24) zu identifizieren, und das dem Objekt zugeordnete Betriebsprogramm zu starten oder zur Auswahl anzuzeigen.

15. Dentalgerät (10) nach einem der vorhergehenden Ansprüche, **dadurch gekennzeichnet, dass** das Dentalgerät (10) von einem dentalen Brennofen, oder von einem dentalen Pressofen oder von einem Lichthärtgerät gebildet ist.

## Claims

1. Dental device (10) for the treatment of a dental restoration part, comprising at least one operating program, a storage (16) of the dental device (10) and at least one detection device (18) for at least one object (24), wherein the detection device (18) can detect data of the object (24), **characterized in that** the detection device (18) can store this data, together with an operating program associated with the object, in a storage of the dental device (10).

2. Dental device (10) according to claim 1, **characterized in that** the data detected by the detection device can be compared to the data of objects which have been stored in advance in the storage of the dental device (10) and that the dental device, depending on the comparison result of the data of a detected object with the data of objects which have been stored in advance in the storage of the dental device, starts the associated operating program or shows it for selection.

3. Dental device (10) according to claims 1 or 2, **characterized in that** the operating program is formed by an operating program executable in the dental device (10) or by an operating program group executable in the dental device.

4. Dental device (10) according to claims 1, 2 or 3, **characterized in that** the detection device (18) is provided with an image recognition device which is suitable for recognizing an image of the object (24) detected by the detection device and/or features of the image.

5. Dental device (10) according to any of the preceding claims, **characterized in that** the data consists of at least one image and/or at least one parameter of the object (24).

6. Dental device (10) according to claim 5, **characterized in that** the at least one parameter of the object (24) is a physical and/or optical feature of the object (24), such as the outer contour and/or the height and/or the width and/or the surface condition of the object, and/or colors and/or patterns and/or the primer coat of the object.

7. Dental device (10) according to any of the preceding claims and an object, wherein the object (24) is a one- or multi-unit dental restoration part and/or a blank to be treated in the dental device (10) and/or a muffle and/or a packaging for a dental material which can be encoded in terms of color or symbols.

8. Dental device (10) according to any of the preceding claims and an object, wherein the object (24) is an identification feature such as a chip card.

9. Dental device (10) according to any of the preceding claims, **characterized in that** the detection device (18) is provided with at least one camera (20) or at least one sensor, in particular an image sensor, whose detection areas (22) extend into the interior of the dental device (10) and/or outside the dental device (10).

10. Dental device (10) according to any of the preceding claims, **characterized in that** the detection device (18) detects the position and/or the rotational position of the object (24) in space and can be pivoted in particular at the dental device (10) or relative to the dental device.

11. Dental device (10) according to any of the preceding claims, **characterized in that** comparing the data of a detected object (24) with the data of the stored objects is realized using a comparison device.

12. Dental device (10) according to any of the preceding claims, **characterized in that** if no unambiguous assignment to an operating program or an operating program group can be made when comparing the data of the detected object (24) with the stored data, the data of at least two objects (24) is displayed on a display device (14), whose data is most similar to the data of the detected object (24) and that the user himself/herself chooses the data which corresponds to the operating program or operating program group desired by him/her.

13. Dental device (10) according to claim 12, **characterized in that** the display device (14) is suitable for displaying the object (24) detected by the detection device (18) reduced or increased in size.

14. Dental device (10) according to claims 2 to 13, **characterized in that** the image recognition device is suitable for identifying an object (24) with the help of the detected features of an image and for starting the operating program associated with the object or for showing it for selection.

15. Dental device (10) according to any of the preceding claims, **characterized in that** the dental device (10) is formed by a dental furnace or by a dental press furnace or by a light curing device.

## Revendications

1. Appareil dental (10) pour le traitement d'une pièce de restauration dentaire, comportant au moins un programme d'exploitation doté d'une mémoire (16) de l'appareil dental (10) et au moins un dispositif de saisie (18) pour au moins un objet (24), dans lequel, avec le dispositif de saisie (18), les données de l'objet (24) peuvent être saisies, **caractérisé en ce que**, avec le dispositif de saisie (18), ces données peuvent être enregistrées conjointement à un programme d'exploitation affecté à l'objet, dans une mémoire de l'appareil dental (10).

2. Appareil dental (10) selon la revendication 1, **caractérisé en ce que** les données saisies par le dispositif de saisie sont comparées à des données d'objets enregistrés au préalable dans la mémoire de l'appareil dental (10), et **en ce que** l'appareil dental lance ou affiche au choix, en fonction du résultat de comparaison des données d'un objet saisi, avec des données d'objets enregistrés au préalable dans la mémoire de l'appareil dental, le programme d'exploitation correspondant.

3. Appareil dental (10) selon la revendication 1 ou 2, **caractérisé en ce que** le programme d'exploitation est constitué d'un programme d'exploitation pouvant se dérouler dans l'appareil dental (10) ou par un groupe de programmes d'exploitation pouvant se dérouler dans l'appareil dental.

4. Appareil dental (10) selon la revendication 1, 2 ou 3, **caractérisé en ce que** le dispositif de saisie (18) présente un dispositif de reconnaissance d'image qui est approprié pour reconnaître une image de l'objet (24) saisie par le dispositif de saisie et/ou des caractéristiques de l'image.

5. Appareil dental (10) selon l'une des revendications précédentes, **caractérisé en ce que** les données consistent en au moins une image et/ou au moins un paramètre de l'objet (24).

6. Appareil dental (10) selon la revendication 5, **caractérisé en ce que** le au moins un paramètre de l'objet (24) est une caractéristique physique et/ou optique de l'objet (24) telle que le contour extérieur et/ou la hauteur et/ou la largeur et/ou l'état de surface de l'objet et/ou les couleurs et/ou le modèle et/ou le revêtement de l'objet.

7. Appareil dental (10) selon l'une des revendications précédentes et objet, l'objet (24) étant une pièce de restauration dentale à un ou plusieurs éléments et/ou une ébauche à traiter dans l'appareil dental (10) et/ou un moufle et/ou un conditionnement pour un matériau dental qui peut être codé par une couleur ou par un signe.

8. Appareil dental (10) selon l'une des revendications précédentes et objet, l'objet (24) étant une caractéristique d'identification telle qu'une carte à puce.

9. Appareil dental (10) selon l'une des revendications précédentes, **caractérisé en ce que** le dispositif de saisie (18) présente au moins une caméra (20) ou au moins un capteur, en particulier un capteur d'image dont les zones de saisie (22) s'étendent à l'intérieur de l'appareil dental (10) et/ou à l'extérieur de l'appareil dental (10).

10. Appareil dental (10) selon l'une des revendications précédentes, **caractérisé en ce que** le dispositif de saisie (18) saisit la position et/ou la position de rotation de l'objet (24) dans l'espace et en particulier peut pivoter sur l'appareil dental (10) ou par rapport à l'appareil dental.

11. Appareil dental (10) selon l'une des revendications précédentes, **caractérisé en ce que** la comparaison des données d'un objet saisi (24) avec les données des objets enregistrés s'effectue avec un dispositif de comparaison.

12. Appareil dental (10) selon l'une des revendications précédentes, **caractérisé en ce que**, si lors de la comparaison des données de l'objet saisi (24) avec les données enregistrées, aucune affectation claire à un programme d'exploitation ou à un groupe de programmes d'exploitation ne peut s'effectuer sur un dispositif d'affichage (14), les données d'au moins deux objets (24) sont affichées, dont les données sont les plus proches des données de l'objet saisi (24) et **en ce que** l'utilisateur choisit lui-même les données qui correspondent au programme d'exploitation ou au groupe de programmes d'exploitation souhaités par lui.

13. Appareil dental (10) selon la revendication 12, **caractérisé en ce que** le dispositif d'affichage (14) est approprié pour représenter de façon réduite ou agrandie l'objet saisi (24) par le dispositif de saisie (18).

14. Appareil dental (10) selon l'une des revendications 2 à 13, **caractérisé en ce que** le dispositif de reconnaissance d'image est approprié pour identifier un objet (24) à l'aide des caractéristiques saisies d'une image et pour lancer et afficher au choix le programme d'exploitation affecté à l'objet.

15. Appareil dental (10) selon l'une des revendications précédentes, **caractérisé en ce que** l'appareil dental (20) est formé d'un four céramique ou d'un four de pressé dentaire ou d'un appareil de photodurcissement.
